# EUROPEAN PATENT APPLICATION

(11) **EP 2 789 762 A1**
(43) Date of publication of application: **15.10.2014**
(21) Application number: 13425051.3
(22) Date of filing: 09.04.2013
(51) Int. Cl.: E04C 2/54

(54) **Multilayer sheet for interior and exterior partitions and linings**

(71) Applicant: King & Miranda Design s.r.l., 20144 Milano (IT)
(72) Inventor: Miranda Camino, Santiago, 20144 Milano (IT); King, Perry Allan, 20144 Milano (IT)
(74) Representative: Mittler, Enrico

(57) **Abstract**

A multilayer sheet (1, 1b) for interior and exterior partitions and linings is described, comprising at least one transparent material sheet (4) enclosed between at least two opaque material sheets (2, 3), each with at least one through hole (20) coinciding with at least one through hole (30) in the other opaque material sheet (3). The opaque material sheets (2, 3) are preferably made of porcelain ceramic material, and the transparent material sheet (4) is preferably made of transparent glass (Figure 1).

## Description

The present invention relates to a multilayer sheet for interior and exterior partitions and linings.

Many multilayer sheets for linings already exist, as described in patent DE3921779A1, for example, where the multilayer sheet comprises two ceramic material layers and two or more inner fiberglass layers with thermal insulation function. Said multilayer sheets are totally opaque.

There are patents, such as US4640850, for example, describing a multilayer sheet for linings comprising a stone material layer protected by a transparent glass layer so as to make the stone material glossier. Disadvantageously, light cannot pass through said multilayer sheets.

In order to let light filter through the stone, patent EP1555119A1 describes a multilayer sheet for linings comprising at least one thin marble layer protected by at least one transparent glass layer. Said marble sheet is difficult to be created and disadvantageously fragile. Also, said thin marble sheet allows only part of the light to filter through and does not allow to see therethrough.

In order to let unfiltered light pass through a wall, the wall must need to be perforated, thus decreasing its insulation.

Porcelain ceramic material sheets, which have acoustic and thermal insulating properties, but absolutely do not let light through, are also known.

It is the object of the present invention to provide a solid multilayer sheet with excellent thermal and acoustic insulation properties, which allows light to penetrate and vision therethrough.

In accordance with the invention, such an object is achieved by a multilayer sheet for partitions and linings, **characterized in that** it comprises at least one transparent material sheet enclosed between at least two opaque material sheets, in particular porcelain ceramic sheets, each of which has at least one through hole coinciding with at least one through hole in the other opaque material sheet.

Preferably, the transparent material sheet is a glass sheet.

A further object of the present invention is to provide a method for constructing solid light walls which allow vision therethrough.

In accordance with the invention, such a further object is achieved by a method for making solid partitions and linings comprising at least one multilayer sheet, **characterized in that** it comprises inserting at least one transparent material sheet between at least two opaque material sheets, in particular porcelain ceramic sheets, each of which provided with at least one through hole coinciding with at least one through hole in the other opaque material sheet.

These and other features of the present invention will become further apparent from the following detailed description of embodiments thereof shown by way of non-limitative example in the accompanying drawings, in which:
Figure 1 shows a front perspective view of a multilayer sheet according to the present invention;
Figure 2 shows a rear view of the multilayer sheet;
Figure 3 shows a section view taken along the line III-III in Figure 2;
Figure 4 shows a front perspective view of an alternative multilayer sheet according to the present invention;
Figure 5 shows a rear view of the alternative multilayer sheet;
Figure 6 shows a section view taken along line VI-VI in Figure 5.

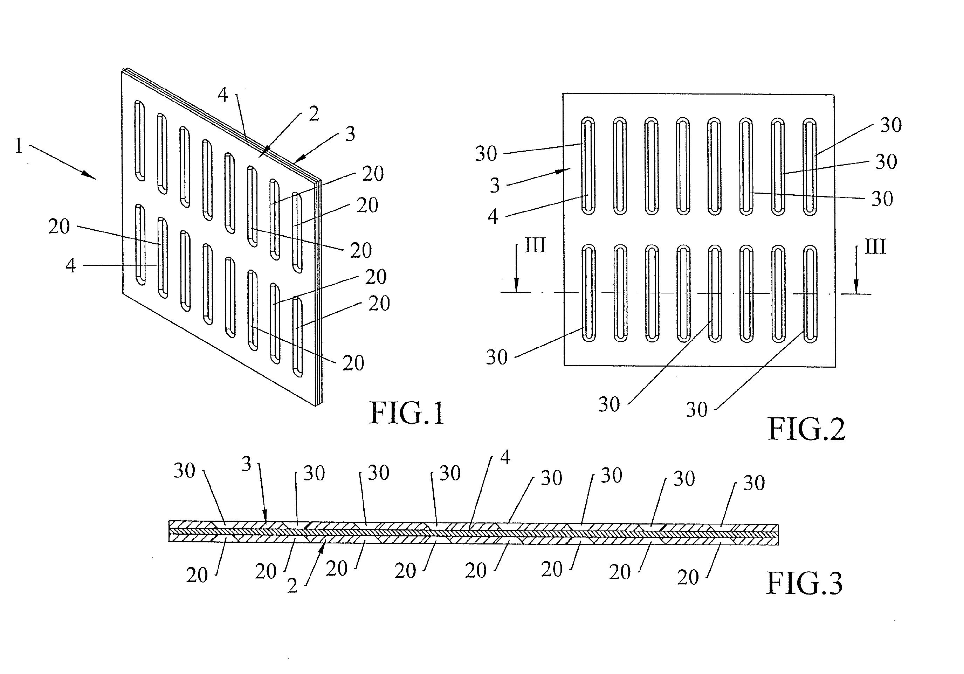

Figures 1-3 show an exemplary multilayer sheet 1 comprising a transparent material sheet 4 enclosed between an opaque material sheet 2, namely a porcelain ceramic material sheet, and another opaque material sheet 3, namely a porcelain ceramic material sheet.

Said two porcelain ceramic material sheets 2, 3 have the same size and shape as the transparent material sheet 4.

The porcelain ceramic material sheet 2 is glued over a front face of the transparent material sheet 4, while the other porcelain ceramic material sheet 3 is glued over a rear face of the transparent material sheet 4.

The porcelain ceramic material sheet 2 has a plurality of identical through holes 20 coinciding with a plurality of through holes 30 in the other porcelain ceramic material sheet 3, said through holes 20 and 30 being sized so as to advantageously allow the vision through the multilayer sheet 1 and to advantageously allow light to pass through the multilayer sheet 1 without being filtered.

Said transparent material sheet 4 is preferably made of transparent glass or transparent plastic material which allows the insulation of the wall to be ensured.

The porcelain ceramic material sheets 2, 3 are preferably made of porcelain stoneware by means of a known process of sintering ceramic clays, feldspars, kaolin and sand. Using other stone materials is alternatively possible.

Sheets 2, 3 may also be made of a different opaque material, e.g. metal or plastic.

A multilayer sheet 1 is made by enclosing a transparent material sheet 4 between two porcelain ceramic material sheets 2, 3 which are glued over both faces. Known glues are applied on both inner faces of the two porcelain ceramic material sheets 2, 3 in order to adhere onto the front face and onto the rear face of the transparent material sheet 4, respectively.

The two porcelain ceramic material sheets 2, 3 are directly obtained with a plurality of respective through holes 20, 30 by means of a cutting or moulding process.

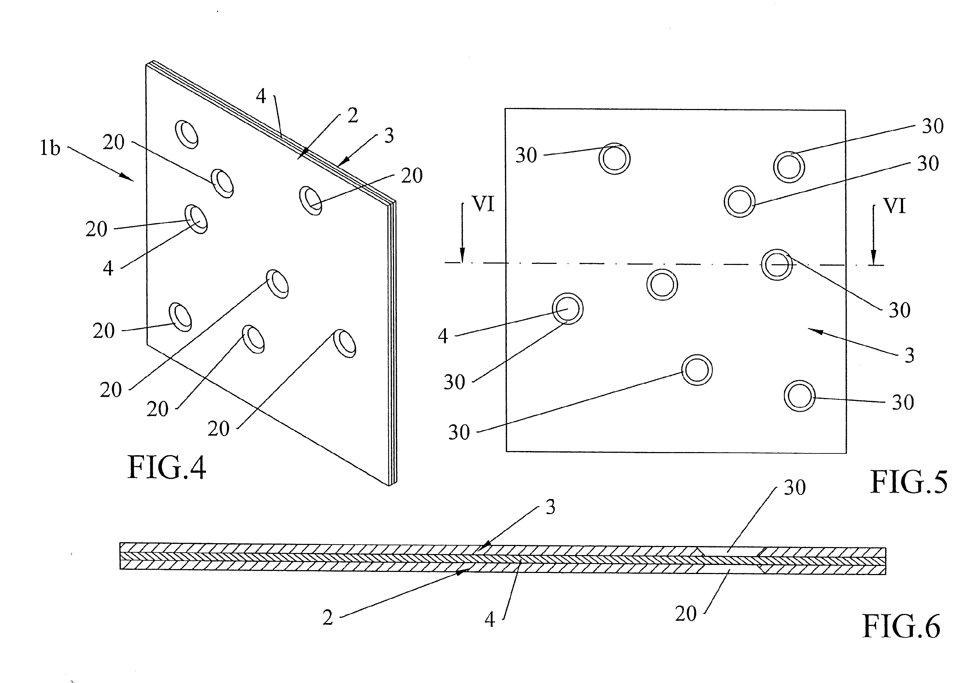

It is possible to include a plurality of spatial arrangements of through holes 20, 30 in the two porcelain stoneware sheets 2, 3, as shown in a first example of multilayer sheet 1 in Figures 1-3 and in a second example of an alternative multilayer sheet 1b in Figures 4-6.

A plurality of said multilayer sheets 1, 1b may be fitted together to form an advantageously solid, light wall (not shown in the figures), with excellent thermal and acoustic insulation properties and which allows the vision through the wall itself. It may be assembled by placing the multilayer sheets side-by-side either vertically or horizontally, e.g. for ceilings.

Alternatively, the multilayer sheets 1, 1b according to the present invention may form furniture walls (not shown in the figures).

The wall thus formed with one or more multilayer sheets 1 according to the present invention allows to advantageously see therethrough, thus permitting unfiltered light to pass therethrough, while keeping excellent thermal and acoustic insulation properties.

## Claims

1. A multilayer sheet (1, 1b) for partitions and linings, **characterized in that** it comprises at least one transparent material sheet (4) enclosed between at least two opaque material sheets (2, 3), each with at least one through hole (20) coinciding with at least one through hole (30) in the other opaque material sheet (3).

2. A multilayer sheet (1, 1b) according to claim 1, **characterized in that** said opaque material sheets (2, 3) consist of porcelain ceramic material sheets.

3. A multilayer sheet (1, 1b) according to claim 1 or 2, **characterized in that** said transparent material sheet (4) is made of transparent glass.

4. A multilayer sheet (1, 1b) according to any one of the preceding claims, **characterized in that** said through holes (20, 30) are dimensioned so as to allow the vision through the multilayer sheet (1).

5. A multilayer sheet (1, 1b) according to any one of the preceding claims, **characterized in that** each of said opaque material sheets (2, 3) comprises a plurality of through holes (20) coinciding with identical through holes (30) in the other opaque material sheet (2, 3).

6. A multilayer sheet (1, 1b) according to any one of claims 1-5, **characterized in that** the through holes (20, 30) in the opaque material sheets (2, 3) are obtained by means of a cutting process.

7. A multilayer sheet (1, 1b) according to any one of claims 1-5, **characterized in that** the through holes (20, 30) in the opaque material sheets (2, 3) are obtained by means of a moulding process.

8. A method for making solid partitions and linings comprising a plurality of multilayer sheets (1, 1b), **characterized in that** it comprises inserting at least one transparent material sheet (4) between at least two opaque material sheets (2, 3), each with at least one through hole (20) coinciding with at least one through hole (30) in the other opaque material sheet (3).

9. A method according to claim 8, **characterized in that** said opaque material sheets (2, 3) consist of porcelain ceramic material sheets.

10. A method according to claim 9, **characterized in that** said transparent material sheet (4) is made of transparent glass.

11. A method according to claim 8, 9 or 10, **characterized in that** said through holes (20, 30) are dimensioned so as to allow the vision through the multilayer sheet (1, 1b).

12. A method according to any one of claims 8-11, **characterized in that** each of said opaque material sheets (2, 3) comprises a plurality of through holes (20) coinciding with identical through holes (30) in the other opaque material sheet (2, 3).

13. A method according to any one of claims 8-12, **characterized in that** the through holes (20, 30) in the opaque material sheets (2, 3) are obtained by means of a cutting process.

14. A method according to any one of claims 8-12, **characterized in that** the through holes (20, 30) in the opaque material sheets (2, 3) are obtained by means of a moulding process.
